# EUROPEAN PATENT APPLICATION

(11) **EP 1 382 804 A2**
(43) Date of publication of application: **21.01.2004**
(21) Application number: 03016086.5
(22) Date of filing: 15.07.2003
(51) Int. Cl.: F01D 17/16

(54) **Hinge device for a rotary member of an aircraft engine**

(30) Priority: 16.07.2002 IT TO20020624
(71) Applicant: AVIO S.p.A., 10040 Rivalta di Torino (IT)
(72) Inventor: Ciacci, Paolo Lorenzo, 10126 Torino (IT); Coutandin, Daniele, 10137 Torino (IT); Dalle Crode, Domenico, 10148 Torino (IT)
(74) Representative: Cerbaro, Elena, Dr.

(57) **Abstract**

A hinge device (12) for a rotary member (11) of an aircraft engine (1) having a conduit (3) housing the rotary member (11) and for conducting a stream of gas, and a cavity (9) outside the conduit (3) and for receiving a mass of air having, in use, a higher pressure than the conduit (3); the device (12) having a seat (18) formed in a platform (6) interposed between the cavity (9) and the conduit (3), and a pin (16) integral with the rotary member (11) and engaging the seat (18) to rotate about an axis (15); the pin (16) is cooled by a stream of air, which flows inside a passage (42) having an inlet (43) which comes out inside the cavity (9), an outlet (44) which comes out inside the conduit (3), and at least one number of channels (46, 48, 50, 56, 60) formed outside the pin (16) and spaced angularly apart; and part of the passage (46, 48, 50) is formed on a collar portion (33) fitted to the pin (16) to calibrate the flow of air inside the passage (42).

## Description

The present invention relates to a hinge device for a rotary member of an aircraft engine, and in particular for a variable-geometry axial-flow turbine stator blade, to which the following description refers purely by way of example.

In variable-geometry axial-flow turbines, the cross section area of the nozzles of one or more stators can be adjusted by adjusting the angular position of the stator blades about respective axes incident with the turbine axis. More specifically, each blade normally comprises two cylindrical pins located on opposite sides of the airfoil profile of the blade and hinged to respective platforms defining the gas conduit.

The extremely high operating temperature of the gas produces serious thermal expansion of the blades and other components, which may result in jamming or even seizure at the connection regions between the pins and stator platforms, thus impairing operation of the turbine.

Cooling of the connection regions is therefore required, for which various solutions are known. These, however, call for a relatively large amount of air to cool the cylindrical outer surface of the pin, fail to provide for homogeneous cooling of the pin, and involve additional drilling of the blade, which is difficult to do accurately, and which tends to produce relatively severe stress concentrations in the blade material.

It is an object of the present invention to provide a hinge device for a rotary member of an aircraft engine, designed to provide a straightforward, low-cost solution to the above problems.

According to the present invention, there is provided a hinge device for a rotary member of an aircraft engine comprising a conduit housing said rotary member and for conducting a stream of gas, and an external environment outside said conduit and for receiving a cooling fluid having, in use, a higher pressure than the stream of gas in said conduit; the hinge device comprising a hinge seat formed in a supporting structure interposed between said external environment and said conduit; a hinge pin integral with said rotary member and engaging said hinge seat to rotate about an axis; and a cooling passage having an inlet which comes out inside said external environment, and an outlet which comes out inside said conduit to cool at least said hinge pin by means of a stream of said cooling fluid; characterized in that said cooling passage comprises at least one number of channels formed outside said hinge pin and distributed angularly about said axis.

More specifically, said cooling passage is formed entirely outside said hinge pin, and the hinge device preferably also comprises a collar portion fitted about said hinge pin; said cooling passage comprising at least one cooling fluid calibration channel formed at least partly on said collar portion in an intermediate position between said inlet and said hinge pin.

A non-limiting embodiment of the invention will be described by way of example with reference to the accompanying drawings, in which:
Figure 1 shows a section, with an enlarged detail for clarity, of a preferred embodiment of the hinge device for a rotary member of an aircraft engine according to the present invention;
Figure 2 shows a larger-scale view in perspective of a detail of the Figure 1 hinge device;
Figure 3 shows a larger-scale view in perspective of a further detail of the hinge device and rotary member in Figure 1;
Figure 4 is similar to Figure 3, and shows, with parts removed for clarity, a variation of the Figure 1-3 device.

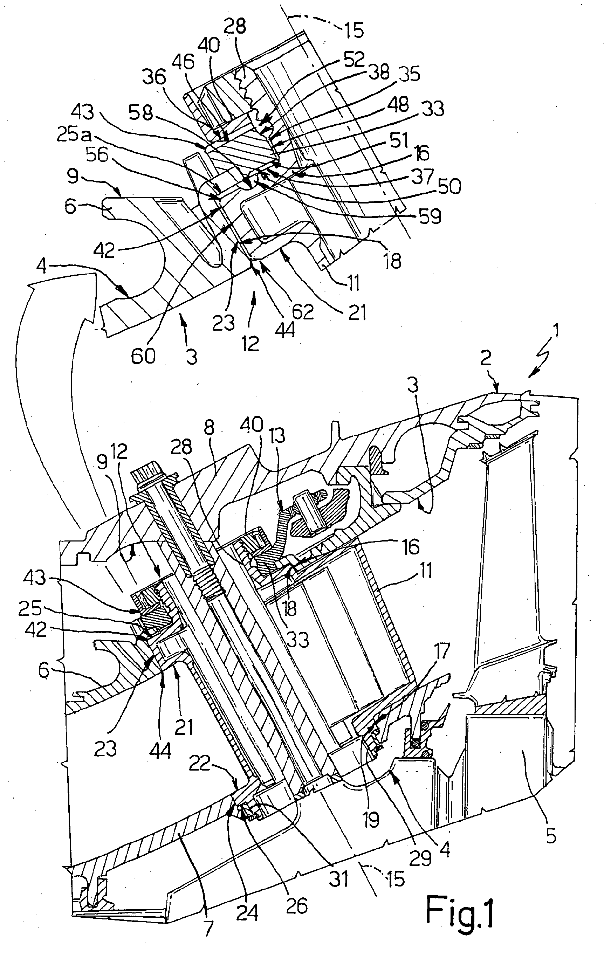

Number 1 in Figure 1 indicates as a whole an aircraft engine. More specifically, Figure 1 shows a partial section of a variable-geometry axial-flow turbine 2, which forms part of engine 1, defines an annular conduit 3 for conducting a stream of relatively hot gas in expansion, and comprises a stator 4, and a rotor 5 downstream from stator 4 (in the gas flow direction along conduit 3).

Stator 4 comprises an outer annular platform 6 and an inner annular platform 7, which between them define a portion of conduit 3 and are housed inside a casing 8 defining, with platforms 6, 7, a cavity 9. Cavity 9 is outside conduit 3, and receives, in use, a mass of air of a lower temperature and higher pressure than the gas flowing along conduit 3.

As shown in Figure 1, conduit 3 houses an array of stator blades 11 (only one shown in section) equally spaced angularly about the axis (not shown) of turbine 2, and each connected to platforms 6, 7 by a relative hinge device 12 and rotated by a relative actuating lever 13 about a relative axis 15 incident with the axis of turbine 2.

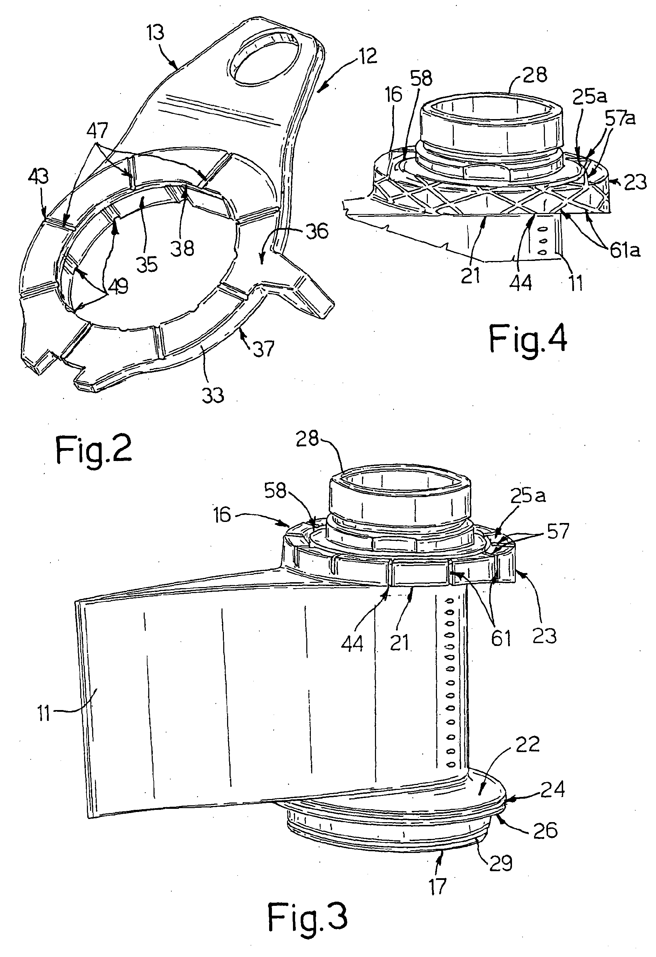

With reference to Figures 1 and 3, device 12 comprises two pins 16, 17, which are located, coaxially with each other along axis 15, on opposite sides of blade 11, are formed in one piece with blade 11, are axially hollow, and engage, in rotary manner about axis 15, respective circular through seats 18, 19 formed in respective platforms 6, 7.

Pins 16, 17 have respective surfaces 21, 22 defining a portion of conduit 3 to guide the stream of gas in use; respective cylindrical lateral surfaces 23, 24 connected in rotary and sliding manner to platforms 6 and 7; and respective shoulders 25, 26 substantially perpendicular to axis 15, and of which shoulder 25 comprises an outer annular portion 25a connected in sliding manner to platform 6 (Figure 1 detail).

Pins 16, 17 also comprise respective end portions 28, 29 projecting axially from respective shoulders 25, 26 and extending through platforms 6, 7 into cavity 9. Portion 29 and shoulder 26 are fitted to platform 7 with the interposition of a ring 31 having an L-shaped cross section; and portion 28 is threaded externally and rotated by lever 13.

With reference to Figure 2, lever 13 comprises a portion defining a collar 33, which is fitted to portion 28 and connected in sliding manner to platform 6. Collar 33 has an inner annular surface 35 fitted to portion 28 in angularly fixed manner and with substantially no radial slack; and two surfaces 36 and 37 perpendicular to axis 15 and located on opposite axial sides of surface 35. Surface 36 is connected to surface 35 by a bevel 38; and surface 37 is held resting axially and in fluidtight manner on platform 6 by a ring nut and washer device 40 fitted to portion 28 and resting axially on surface 36.

With reference to Figures 1 and 2, device 12 also comprises a passage 42 formed outside pin 16 and having an inlet 43, which comes out inside cavity 9, and an outlet 44, which comes out inside conduit 3 to cool the sliding regions between pin 16 and platform 6 by means of a stream of air directed from cavity 9 into conduit 3.

As of inlet 43, passage 42 comprises a number of radial channels 46, which come out inside cavity 9 and are defined, on one side, by the washer of device 40, and, on the other, by respective grooves 47 (Figure 2) formed in surface 36 and equally spaced angularly.

Grooves 47 and inlet 43 are formed to relatively strict tolerances to obtain calibrated flow sections and, therefore, a predetermined desired airflow in passage 42.

Continuing towards outlet 44, passage 42 also comprises a number of axial channels 48, which are defined, on one side, by portion 28, and, on the other, by respective grooves 49 (Figure 2) formed in surface 35 and equally spaced angularly, and communicate with channels 46 via an annular chamber 52 defined by portion 28 and bevel 38 to distribute a homogenous airflow into channels 48. Passage 42 also comprises a number of radial channels 50 forming extensions of channels 48 and defined, on one side, by shoulder 25, and, on the other, by respective grooves 51 (Figure 1 detail) formed in surface 37 and equally spaced angularly.

With reference to Figures 1 and 3, continuing towards outlet 44, passage 42 also comprises a number of channels 56 defined, on one side, by platform 6, and, on the other, by respective radial recesses 57 (Figure 3) formed in portion 25a of shoulder 25 and equally spaced angularly. Channels 56 communicate with channels 50 via an air diffusion chamber 59 (Figure 1) larger in cross section than channels 56 and defined by a circular groove 58 formed on the inner edge of portion 25a, i.e. in an intermediate position between collar 33 and platform 6.

Passage 42 also comprises a number of axial channels 60, which form extensions of channels 56, are defined, on one side, by platform 6, and, on the other, by respective recesses 61 (Figure 3) formed in surface 23 and equally spaced angularly, and come out inside conduit 3 through outlet 44.

Outlet 44 is defined on pin 16 by a bevelled or radiused annular portion 62 (Figure 1), which joins surfaces 23 and 21, and guides a film of air from passage 42 towards surface 21 to cool surface 21 using the so-called "film cooling" method.

In the Figure 4 variation, recesses 57, 61 are replaced by recesses 57a, 61a, which, as opposed to being perfectly axial or radial, intersect and slope to increase their length and, therefore, heat exchange between pin 16 and the cooling air.

In a solution not shown, cooling channels are also formed on pin 17 and ring 31, in the same way as passage 42 described above, to cool shoulder 26 and surfaces 22, 24.

In actual use, because of the pressure difference between cavity 9 and conduit 3, air flows from cavity 9 into passage 42, and flows successively through inlet 43, along channels 46, 48, 50, 56, 60, and through outlet 44 to cool pin 16 and reduce the friction forces between pin 16 and platform 6.

Channels 46 provide for calibrating the airflow directed on to the connection regions between pin 16 and platform 6; channels 56, 60 provide for cooling the whole outer surface of pin 16 about axis 15; and chambers 52, 59 and angularly spaced channels 48, 50 provide for homogenous air temperature and flow in passage 42.

Passage 42 therefore provides for homogeneously cooling the connection regions between pin 16 and platform 6, by channels 46, 48, 50, 56, 60 being distributed about axis 15.

Passage 42 therefore also enables cooling of pin 16 using a relatively small amount of air, on account of channels 56, 60 being distributed about axis 15 and preferably sloping and intersecting.

The calibrated-section passages defined by inlet 43 and by grooves 47 are also relatively easy to form, by the necessary precision machining being performed, not on blade 11, but on an additional collar portion which is only fitted to pin 16 after machining.

Channels 46, 48, 50, 56, 60 are relatively easy to form, do not generate high stress concentrations, and have substantially no effect on the resistance of lever 13 or blade 11, by involving no drilling, and by being defined by surface recesses or grooves only formed outside pin 16.

Clearly, changes may be made to device 12 as described and illustrated herein without, however, departing from the scope of the present invention.

In particular, in addition to variable-geometry turbine stator blades, device 12 may also be applied to rotary members of combustion chamber by-pass valves, or to rotary flaps of post-burners.

The density of channels 46, 48, 50, 56, 60 may be other than as shown, and recesses 57, 61 need not be equally spaced on the outer surface of the pin, so as to cool some regions more than others.

Some portions of passage 42 may be narrower in section to vary cooling air flow speed, and/or the bottom surfaces of recesses 57, 61 need not be smooth, so as to increase turbulence and, therefore, heat exchange between pin 16 and the cooling air.

## Claims

1. A hinge device (12) for a rotary member (11) of an aircraft engine (1) comprising a conduit (3) housing said rotary member (11) and for conducting a stream of gas, and an external environment (9) outside said conduit (3) and for receiving a cooling fluid having, in use, a higher pressure than the stream of gas in said conduit (3); the hinge device comprising a hinge seat (18) formed in a supporting structure (6) interposed between said external environment (9) and said conduit (3); a hinge pin (16) integral with said rotary member (11) and engaging said hinge seat (18) to rotate about an axis (15); and a cooling passage (42) having an inlet (43) which comes out inside said external environment (9), and an outlet (44) which comes out inside said conduit (3) to cool at least said hinge pin (16) by means of a stream of said cooling fluid; **characterized in that** said cooling passage (42) comprises at least one number of channels (46, 48, 50, 56, 60) formed outside said hinge pin (16) and distributed angularly about said axis (15).

2. A hinge device as claimed in Claim 1, **characterized in that** said cooling passage (42) is formed entirely outside said hinge pin (16).

3. A hinge device as claimed in Claim 1 or 2, **characterized by** also comprising a collar portion (33) fitted about said hinge pin (16); said cooling passage (42) comprising at least one cooling fluid calibration channel (46) formed at least partly on said collar portion (33) in an intermediate position between said inlet (43) and said hinge pin (16).

4. A hinge device as claimed in Claim 3, **characterized in that** said cooling passage (42) comprises a first number of channels (46, 48, 50) distributed about said axis (15) and formed at least partly on said collar portion (33).

5. A hinge device as claimed in Claim 4, **characterized in that** the channels in said first number of channels (46, 48, 50) comprise respective grooves (47, 49, 51) formed on an outer surface (36, 35, 37) of said collar portion (33).

6. A hinge device as claimed in Claim 5, **characterized in that** said collar portion (33) comprises an annular surface (35) fitted to said hinge pin (16) with substantially no radial slack; said grooves (49) being formed axially on said annular surface (35).

7. A hinge device as claimed in Claim 6, **characterized in that** said collar portion (33) comprises an end surface (36, 37) extending from said annular surface (35) and crosswise to said axis (15); said cooling passage (42) also comprising a second number of channels (46, 50), each comprising a relative groove (47, 51) formed on said end surface (36, 37).

8. A hinge device as claimed in Claim 7, **characterized in that** said cooling passage (42) also comprises a first annular chamber (52) formed between said first and said second number of channels (46) (48) to distribute said stream of cooling fluid.

9. A hinge device as claimed in Claim 8, **characterized in that** said first annular chamber (52) is defined partly by a bevel (38) between said annular surface (35) and said end surface (36).

10. A hinge device as claimed in any one of the foregoing Claims, **characterized in that** said cooling passage (42) comprises a third number of channels (56, 60) formed at least partly on said hinge pin (16) and distributed angularly about said axis (15).

11. A hinge device as claimed in Claim 10, **characterized in that** the channels in said third number of channels (56, 60) comprise respective recesses (57, 61; 57a, 61a) formed on an outer surface (23, 25a) of said hinge pin (16).

12. A hinge device as claimed in Claim 11, **characterized in that** said recesses (57a, 61a) slope with respect to an axial or radial direction.

13. A hinge device as claimed in Claim 11 or 12, **characterized in that** said recesses (57a, 61a) intersect one another.

14. A hinge device as claimed in any one of Claims 11 to 13, **characterized in that** said cooling passage (42) also comprises a second annular chamber (59) formed upstream from said recesses (57, 61) to distribute said stream of cooling fluid.

15. A hinge device as claimed in Claim 14, **characterized in that** said hinge pin (16) comprises an outer shoulder (25) crosswise to said axis (15) and engaging said hinge seat (18) in rotary manner; said second annular chamber (59) comprising an annular groove (58) formed on said shoulder (25).

16. A hinge device as claimed in any one of Claims 11 to 15, **characterized in that** said outer surface (23, 25a) of said hinge pin (16) is connected in sliding manner to said supporting structure (6) to rotate about said axis (15); said third number of channels (56, 60) coming out inside said conduit (3) through said outlet (44).

17. A hinge device as claimed in any one of the foregoing Claims, **characterized in that** said channels (46, 48, 50, 56, 60) are equally spaced angularly about said axis (15).

18. A hinge device as claimed in any one of the foregoing Claims, **characterized in that** said hinge pin (16) comprises a cylindrical outer surface (23) connected in sliding manner to said supporting structure (6) to rotate about said axis (15); a guide surface (21) for guiding the stream of gas and bounding a portion of said conduit (3); and guide means (62) for guiding said cooling fluid and interposed between said cylindrical outer surface (23) and said guide surface (21) to direct a film of cooling fluid from said cooling passage (42) on to the guide surface (21).

19. A hinge device as claimed in Claim 18, **characterized in that** said guide means comprise a radiused annular portion (62) formed between said guide surface (21) and said cylindrical outer surface (23) and at least partly defining said outlet (44).

20. A hinge device as claimed in any one of the foregoing Claims, **characterized in that** said rotary member is a stator blade (11) of said aircraft engine (1).

21. A hinge device as claimed in any one of the foregoing Claims, **characterized in that** said collar portion (33) forms part of an actuating lever (13) of said rotary member (11).
